# EUROPEAN PATENT APPLICATION

(11) **EP 2 211 040 A2**
(43) Date of publication of application: **28.07.2010**
(21) Application number: 10151650.8
(22) Date of filing: 26.01.2010
(51) Int. Cl.: F02C 3/30

(54) **Gas turbine with introduction of nitrogen**

(30) Priority: 27.01.2009 US 360228
(71) Applicant: General Electric Company, Schenectady, NY 12345 (US)
(72) Inventor: Rodwell, Andrew, Mitchell, Greenville, SC 29615 (US)
(74) Representative: Gray, Thomas

(57) **Abstract**

A power plant (10), including a compressor (30), in which inlet air is compressed for combustion operations, is provided and includes a separation unit (110), which receives and removes nitrogen from an air supply, and a system (120), coupled to the separation unit (110) and an inlet (60) disposed upstream from and in fluid communication with the compressor (30), which receives the nitrogen from the separation unit (110) and delivers the nitrogen to the inlet (60).

## Description

### BACKGROUND OF THE INVENTION

Aspects of the present invention are directed to combined cycle power plants and, more particularly, to combined cycle power plants in which relatively low pressure nitrogen is introduced into a gas turbine inlet.

In oxygen blown integrated gasification combined cycle (IGCC) or natural gas reforming combined cycle (NGRCC) power plants, nitrogen is available from an air separation unit (ASU) that can be used as a fuel diluent to suppress the formation of NOx. This nitrogen is traditionally injected directly into the combustor or blended with the fuel.

Nitrogen from the air separation unit for gas turbine NOx suppression is, generally, only available at atmospheric or relatively low pressure. Thus, whether the nitrogen is injected separately or blended in the fuel, there is a significant equipment cost required to compress the nitrogen in addition to a large auxiliary power consumption cost that reduces plant efficiency. Additionally, the resulting large mass flow injected into the combustor introduces gas turbine cycle and component design challenges such as a high pressure ratio, high turbine mach numbers and component life impacts due to high turbine flows.

In addition, the injection of nitrogen into the combustor or the blending of the nitrogen with the fuel demands a relatively high level of operational and control complexity in integrating the nitrogen compression, the blending and the flow control operations. As a result, use of the nitrogen is often disregarded with the nitrogen being vented. However, in these cases, there is typically a further need to abate NOx emissions with steam, incurring a performance penalty that increases capital and operating costs.

### BRIEF DESCRIPTION OF THE INVENTION

According to one aspect of the invention, a power plant, including a compressor, in which inlet air is compressed for combustion operations, is provided and includes a separation unit, which receives and removes nitrogen from an air supply, and a system, coupled to the separation unit and an inlet disposed upstream from and in fluid communication with the compressor, which receives the nitrogen from the separation unit and delivers the nitrogen to the inlet.

According to another aspect of the invention, a power plant, including a compressor, in which inlet air is compressed for combustion operations that occur in a combustor downstream from the compressor, is provided and includes a separation unit, which receives and removes nitrogen from an air supply, and a system, coupled to the separation unit and an inlet disposed upstream from and in fluid communication with the compressor, which receives the nitrogen from the separation unit and delivers a first portion thereof to the inlet and a second portion thereof to the compressor.

According to yet another aspect of the invention, a method of operating a power plant is provided and includes removing nitrogen from an air supply, and delivering the removed nitrogen to an inlet disposed upstream from and in fluid communication with a compressor in which inlet air is compressed for combustion operations.

These and other advantages and features will become more apparent from the following description taken in conjunction with the drawings.

### BRIEF DESCRIPTION OF THE DRAWING

There follows a detailed description of embodiments of the invention by way of example only with reference to the accompanying drawings, in which:

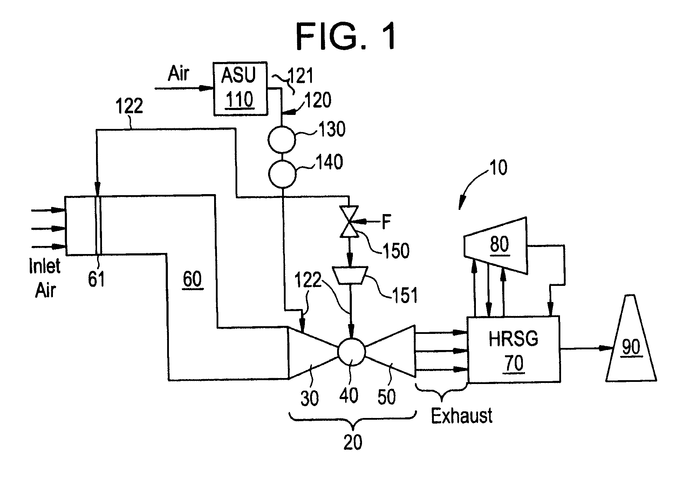

FIG. 1 is a schematic diagram of an exemplary combined cycle power plant in accordance with embodiments of the present invention.

### DETAILED DESCRIPTION OF THE INVENTION

With reference to FIG. 1, a power plant 10, such as a combined cycle power plant, an integrated gasification combined cycle (IGCC) power plant or a natural gas reforming combined cycle (NGRCC) power plant, is provided. In general, the power plant 10 includes a gas turbine 20. The gas turbine 20 includes a compressor 30, in which inlet air is compressed for combustion operations, a combustor 40, in which combustion occurs, and a turbine 50, in which the products of the combustion are harnessed for power generation. In addition, a filter housing 60 is provided as an inlet for the compressor 30 upstream from the compressor 30 through which the inlet air proceeds to the compressor 30 from the atmosphere. Also, a heat recovery steam generator (HRSG) 70 is positioned proximate to the exhaust stream of the turbine 50 and generates steam used by a steam turbine 80 is further power generation. A stack 90, coupled to the HRSG 70, serves to release remaining products into the atmosphere.

As shown in FIG. 1, a separation unit 110, such as an air separation unit (ASU) 110, receives and removes nitrogen, N₂, from an air supply, which may be provided from atmosphere surrounding the gas turbine 20. Here, the removed nitrogen will generally be substantially, but not entirely, pure. Further, it is understood that the ASU 110 may receive and remove nitrogen along with other constituents from the air supply.

A system 120 is coupled at a first portion 121 thereof to the separation unit 110 and at a second portion 122 thereof to the filter housing 60, the compressor 30 or, in some cases, to the combustor 40. In this way, the system 120 is configured to deliver the nitrogen and any of the other constituents (the combination of which will be hereinafter generally referred to as "nitrogen") removed from the air supply to the filter housing 60, the compressor 30 or the combustor 40.

Where the nitrogen is delivered to the filter housing 60, a point of delivery may be located near an upstream inlet of the filter housing 60. This way, the delivered nitrogen is given an opportunity to mix with the inlet air as the delivered nitrogen and the inlet air proceed along the axial length of the filter housing 60.

In an embodiment, the system 120 may be coupled to a distribution manifold 61 that is disposed within or proximate to the upstream inlet of the filter housing 60. Such a distribution manifold 61 could serve as a device or system by which the delivered nitrogen enters the filter housing 60 and, in addition, could be embodied in parts that serve to support anti-icing filters, coalescing filters, vane separators or some other similar devices, which may already be installed in filter housings of operational power plants. With the nitrogen being distributed by the distribution manifold 61 in this manner, the nitrogen delivery could be accomplished with little or no additional parts and without significant modifications to operational power plants.

In accordance with embodiments of the invention, the nitrogen removed from the air supply may be delivered at a pressure that is substantially near atmospheric pressure. Also, the power plant 10 may further include a de-compressor 130, disposed along piping of the system 120 or within the separation unit 110, which expands a volume of the nitrogen prior to the delivery thereof. Still further, the power plant 10 may also include a heat exchanger 140, disposed along the piping of the system 120 or within the separation unit 110, which cools the nitrogen prior to the delivery thereof.

In accordance with another aspect of the invention, the system 120 delivers a first portion of the nitrogen to the filter housing 60 and a second portion of the nitrogen to the compressor 30. In addition, the system 120 may deliver a third portion of the nitrogen to the combustor 40. Where the nitrogen is delivered to the compressor 30 or the combustor 40, the nitrogen may be delivered in pure form or, in some cases, as having been mixed with air or other suitable gases. Such mixing could be controlled in accordance with current atmospheric and combustion conditions. Where the nitrogen is delivered to the combustor 40, in another embodiment, the nitrogen may be mixed with fuel F by way of, e.g., valve 150, which is disposed along piping of the system 120, and compressed by way of a second compressor 151, which is disposed downstream from the valve 150. With respect to each of these cases, the delivery of the first, second and third portions of the nitrogen to the inlet of the filter housing 60, the compressor 30 and the combustor 40 may be achieved individually and/or jointly in accordance with current conditions and performance requirements.

In accordance with yet another aspect of the invention, a method of operating a combined cycle power plant 10 is provided. The method includes removing nitrogen from an air supply, such as atmospheric air, and delivering the removed nitrogen to an inlet, such as the filter housing 60 or the compressor 30, such that the nitrogen is fed to the compressor 30, in which inlet air is compressed for combustion operations.

In accordance with embodiments of the invention, the delivering of the nitrogen may include delivering the nitrogen at an extreme upstream position within the filter housing 60. In addition, the delivering of the nitrogen may also include expanding the removed nitrogen by way of, e.g., a de-compressor 130, and/or cooling the removed nitrogen by way of, e.g., a heat exchanger 140.

In accordance with additional embodiments of the invention, the delivering may include delivering a first portion of the nitrogen to the inlet of the filter housing 60 and a second portion of the nitrogen to the compressor 30. In some cases, the delivering may further include delivering a third portion of the nitrogen to the combustor 40. In such cases, the method may further include mixing the nitrogen with fuel by way of valve 150.

Various aspects and embodiments of the present invention are defined by the following numbered clauses:
1. A power plant, including a compressor, in which inlet air is compressed for combustion operations, the power plant comprising:
   a separation unit, which receives and removes nitrogen from an air supply; and
   a system, coupled to the separation unit and an inlet disposed upstream from and in fluid communication with the compressor, which receives the nitrogen from the separation unit and delivers the nitrogen to the inlet.
2. The power plant according to clause 1, wherein the nitrogen is delivered to the inlet at a pressure substantially near to atmospheric pressure.
3. The power plant according clause 2, further comprising a de-compressor which expands a volume of the nitrogen prior to the delivery thereof to the inlet.
4. The power plant according to clause 2, further comprising a heat exchanger which cools the nitrogen prior to the delivery thereof to the inlet.
5. The power plant according to clause 1, wherein the system comprises a bleed heat system.
6. The power plant according to clause 1, wherein the inlet comprises a filter housing, the filter housing including a distribution manifold disposed at an upstream position thereof.
7. The power plant according to clause 6, wherein the system is coupled to the distribution manifold and the nitrogen is delivered to the inlet through the distribution manifold.
8. A power plant, including a compressor, in which inlet air is compressed for combustion operations that occur in a combustor downstream from the compressor, the power plant comprising:
   a separation unit, which receives and removes nitrogen from an air supply; and
   a system, coupled to the separation unit and an inlet disposed upstream from and in fluid communication with the compressor, which receives the nitrogen from the separation unit and delivers a first portion thereof to the inlet and a second portion thereof to the compressor.
9. The power plant according to clause 8, wherein the system further delivers a third portion of the nitrogen to the combustor.
10. The power plant according to clause 9, wherein the third portion of the nitrogen is mixed with fuel.
11. A method of operating a power plant, comprising:
   removing nitrogen from an air supply; and
   delivering the removed nitrogen to an inlet disposed upstream from and in fluid communication with a compressor of the combined cycle power plant in which inlet air is compressed for combustion operations.
12. The method according to clause 11, further comprising receiving atmospheric air as a portion of the air supply.
13. The method according to clause 11, wherein the delivering comprises expanding the removed nitrogen.
14. The method according to clause 11, wherein the delivering comprises cooling the removed nitrogen.
15. The method according to clause 11, wherein the delivering comprises delivering a first portion of the nitrogen to the inlet and a second portion of the nitrogen to the compressor.
16. The method according to clause 15, wherein the delivering further comprises delivering a third portion of the nitrogen to a combustor downstream from the compressor.
17. The method according to clause 16, further comprising mixing the nitrogen with fuel.

## Claims

1. A power plant (10), including a compressor (30), in which inlet air is compressed for combustion operations, the power plant (10) comprising:
a separation unit (110), which receives and removes nitrogen from an air supply; and
a system (120), coupled to the separation unit (110) and an inlet (60) disposed upstream from and in fluid communication with the compressor (30), which receives the nitrogen from the separation unit (110) and delivers the nitrogen to the inlet (60).

2. The power plant (10) according to claim 1, wherein the nitrogen is delivered to the inlet (60) at a pressure substantially near to atmospheric pressure.

3. The power plant (10) according to claim 2, further comprising a de-compressor (130) which expands a volume of the nitrogen prior to the delivery thereof to the inlet (60).

4. The power plant (10) according to claim 2 or 3, further comprising a heat exchanger (140) which cools the nitrogen prior to the delivery thereof to the inlet (60).

5. The power plant (10) according to any of the preceding claims, wherein the system comprises a bleed heat system.

6. The power plant (10) according to any of the preceding claims, wherein the inlet (60) comprises a filter housing, the filter housing including a distribution manifold (61) disposed at an upstream position thereof.

7. The power plant (10) according to claim 6, wherein the system (120) is coupled to the distribution manifold (61) and the nitrogen is delivered to the inlet (60) through the distribution manifold (61).

8. A power plant (10), including a compressor (30), in which inlet air is compressed for combustion operations that occur in a combustor downstream from the compressor, the power plant (10) comprising:
a separation unit (110), which receives and removes nitrogen from an air supply; and
a system (120), coupled to the separation unit (110) and an inlet (60) disposed upstream from and in fluid communication with the compressor (30), which receives the nitrogen from the separation unit (110) and delivers a first portion thereof to the inlet (60) and a second portion thereof to the compressor (30).

9. The power plant (10) according to claim 8, wherein the system (120) further delivers a third portion of the nitrogen to the combustor (40).

10. A method of operating a power plant (10), comprising:
removing nitrogen from an air supply; and
delivering the removed nitrogen to an inlet (60) disposed upstream from and in fluid communication with a compressor (30) of the combined cycle power plant (10) in which inlet air is compressed for combustion operations.

11. The method according to claim 10, further comprising receiving atmospheric air as a portion of the air supply.

12. The method according to claim 10 or 11, wherein the delivering comprises expanding the removed nitrogen.

13. The method according to any of claims 10 to 12, wherein the delivering comprises cooling the removed nitrogen.

14. The method according to any of claims 10 to 13, wherein the delivering comprises delivering a first portion of the nitrogen to the inlet and a second portion of the nitrogen to the compressor.

15. The method according to claim 14, wherein the delivering further comprises delivering a third portion of the nitrogen to a combustor downstream from the compressor.
